# EUROPEAN PATENT APPLICATION

(11) **EP 4 715 232 A1**
(43) Date of publication of application: **25.03.2026**
(21) Application number: 25203871.6
(22) Date of filing: 23.09.2025
(51) Int. Cl.: F16C 19/52, F16C 41/00, H02K 5/173, F16C 19/06, H01R 13/24

(54) **SHAFT GROUNDING MEMBER FOR ROLLING BEARING, AND ROLLING BEARING UNIT**

(30) Priority: 24.09.2024 JP 2024165351; 18.04.2025 JP 2025069113
(71) Applicant: NSK-WARNER K.K., Tokyo 141-8560 (JP)
(72) Inventor: FURUYA, Masatomo, Fukuroi-shi, Shizuoka, 437-8535 (JP); SETOI, Mutsumi, Fukuroi-shi, Shizuoka, 437-8535 (JP); MURAMATSU, Fumimasa, Fukuroi-shi, Shizuoka, 437-8535 (JP)
(74) Representative: Berggren Oy

(57) **Abstract**

A shaft grounding member for a rolling bearing, the shaft grounding member being mounted on a rolling bearing unit including the inner ring rotating type rolling bearing in which an outer ring is fixed to a housing and in which a shaft directly connected to a motor is fitted into an inner ring, the shaft grounding member includes: a spring plate including an annular portion and an elastic portion extending continuously from an inner peripheral side end portion of the annular portion to a center of the annular portion, the spring plate being made of a thin plate of a conductive material; and a soft conductive member mounted on a surface of the elastic portion on a side facing the rolling bearing. The soft conductive member is configured to abut against an end surface of the shaft. The spring plate includes a plurality of bent portions provided at a portion of the annular portion facing a side surface of the outer ring so as to be bent in an axial direction, the plurality of bent portions being deformed to apply a pressing force to the outer ring.

## Description

### BACKGROUND

### 1. Field of the Invention

The present invention relates to a shaft grounding member for a rolling bearing that prevents occurrence of electrolytic corrosion or generation of electromagnetic noise of a rolling bearing in a rolling bearing unit, and the rolling bearing unit provided with the shaft grounding member for a rolling bearing.

### 2. Description of the Related Art

In recent years, there has been a progress in practical use of an electric vehicle in which an electric motor serving as a drive source is provided inside or in the vicinity of the wheels to drive the wheels. Such a drive motor is generally called an in-wheel motor. The general in-wheel motor has a structure in which a stator is fixed to a motor housing and a rotor is provided on the inner diameter side of the stator with a gap in the radial direction, and is a so-called inner rotor type motor. As a drive method for the in-wheel motor, a brushless DC motor driven by an inverter is often used in consideration of the performance and the control performance of the motor.

In the method of driving with the inverter, a potential difference occurs between the stator and the rotor due to the parasitic capacitance between the stator and the rotor. This potential difference generates a so-called shaft voltage and shaft current, and when this shaft current passes through the rolling bearing that supports the rotor, a phenomenon called "electrolytic corrosion" occurs that damages the rolling bearing.

Specifically, the current flows locally in the contact portion between the raceway surfaces of the outer ring and the inner ring of the rolling bearing and the rolling elements, and the raceway surface or the rolling surface is melted and becomes uneven. This not only roughens the rolling surface and the rolling element surface of the bearing, causing the noise and the vibration, but also affects the life of the bearing if excessive electrolytic corrosion occurs.

In order to prevent the electrolytic corrosion of the rolling bearing, a conductive member is sometimes used. For example, JP2011-135720A and JP2011-135722A propose a conductive member including a contact body that electrically conducts with the rotor of the motor, an elastic body that presses the contact body toward the rotor, and a storage portion that stores the contact body and the elastic body, in which the storage portion is provided in a motor housing and electrically connected to the motor stator via the motor housing.

JP2020-127257A proposes a grounding device in which the distal end portion of a broom-shaped conductive fiber is brought into contact with the outer peripheral surface of a rotating shaft.

Further, JP2002-146568A proposes an electrolytic corrosion prevention device in which an annular seat portion in contact with the end surface of a bearing outer ring is bent into a wave washer shape, an elastic conductor including a contact piece that is extended from the inner side of the annular seat portion and that is in contact with the vicinity of the end surface center portion of the rotating shaft is used, and the surface of the annular seat portion is pressed by the lid-shaped wall of a bearing housing and electrically conducted in the state in which the contact piece abuts against the vicinity of the end surface center portion of the rotating shaft fitted to the bearing inner ring, and in which the annular seat portion is overlapped with the end surface of the bearing outer ring fitted in the bearing housing.

Further, JPH04-8820U proposes that a rod-shaped conductive brush is accommodated in a support hole formed in either one of two bearing rings, the distal end of the conductive brush is biased toward the other bearing ring and is brought into sliding contact with the other bearing ring by the elastic member, and the two bearing rings are electrically conducted.

JP2017-060401A proposes that the distal end portion of a shaft grounding brush made of a carbon filament abuts against an extension shaft, a shaft voltage generated in the shaft is grounded and removed, and electrolytic corrosion generated in a bearing is prevented.

In the bearing, measures against electromagnetic noise generated by electromagnetic interference are required, and various devices for preventing the generation of electromagnetic noise have been proposed. For example, JP2024-130948A proposes that a rod-shaped carbon brush having conductivity is accommodated between an inner ring and a metal ring, and the distal end of the carbon brush attached to the metal ring is biased against the inner ring by a spring and brought into sliding contact with the inner ring, thereby imparting conductivity performance to the conductive bearing and allowing a current flowing through the conductive bearing to flow outside the system via the metal ring and the brush to remove electromagnetic noise.

JP2023-01 8214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes that a rolling element having conductivity is rolled between an outer ring and an inner ring in a state in which an oil film is cut to secure a path for charges, and the impedance between the outer ring and the inner ring or the impedance of the entire bearing is significantly reduced to improve the electromagnetic noise prevention effect and the electrolytic corrosion prevention effect.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

However, in the technique described in any piece of the related arts, the abrasion powder generated from the conductive member may contaminate the lubricating oil or the grease composition sealed for lubrication and may damage the raceway surface or the rolling surface. The mating member of the conductive member may be damaged and the abrasion powder may be generated.

Specifically, in JP2011-135720A and JP2011-135722A, the contact body, the elastic body, and the storage body are metal members and are brought into sliding contact with one another due to the vibration of the motor, and thus the metal powder is generated. It is necessary to provide the contact body, the elastic body, and the storage body in the motor housing, and a space therefor is also required.

In JP2020-127257A, the distal end portion of the broom-shaped conductive fiber is brought into contact with the outer peripheral surface of the rotating shaft. However, in order to increase the contact area between the distal end portion of the broom-shaped conductive fiber and the rotating shaft as compared to when the distal end portion of the broom-shaped conductive fiber and the rotating shaft are simply brought into contact, the broom-shaped conductive fiber is brought into contact with the outer peripheral surface of the rotating shaft in the state of being bent. That is, since the distal end portion of the broom-shaped conductive fiber is in contact with the outer peripheral surface of the rotating shaft with a relatively strong pressing force, the abrasion powder is generated. At the same time, the outer peripheral surface of the rotating shaft, which is the mating member of the broom-shaped conductive fiber, is also damaged.

In JP2002-146568A, both the elastic conductor and the rotating shaft are made of metal, and the metal powder is generated when the elastic conductor and the rotating shaft come into sliding contact. At the same time, the end surface of the rotating shaft, which is the mating member of the elastic conductor, is damaged.

In JPH04-8820U, since the distal end of the rod-shaped conductive brush is in contact with the other bearing ring in the biased state, the abrasion powder of the conductive brush is generated. At the same time, the other bearing ring, which is the mating member of the conductive brush, is also damaged. Further, it is necessary to form a support hole for accommodating the conductive brush and the elastic member on the bearing ring, and a large load is applied to the bearing ring.

In JP2017-060401A, since the distal end portion of the shaft grounding brush made of the carbon filament abuts against the extension shaft, the abrasion powder of the shaft grounding brush is generated. At the same time, the extension shaft, which is the mating member of the shaft grounding brush, is also damaged.

In the bearing disclosed in the related arts excepting JP2000-244180A, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required.

In JP2000-244180A, a wear-resistant member is selected as the sliding contact member, but the effect of reducing wear is not sufficient.

A different type of material such as aluminum different from the bearing material may be used for the housing to which the outer ring serving as the fixed ring is fitted, and in this case, creep or fitting looseness may occur between the fixed ring and the fixing member due to a temperature change. Even when a conductive member is used in an environment in which such creep or fitting looseness may occur, it is required to ensure electrical contact of the conductive member and attain stable conductivity.

### SUMMARY

An object of the present invention is to provide a space-saving and inexpensive shaft grounding member and a rolling bearing unit provided with the shaft grounding member. Accordingly, in addition to preventing the generation of the abrasion powder from a conductive member or the abrasion powder accompanying sliding contact between the conductive member and a mating member, and minimizing damage to the mating member, the shaft grounding member and the rolling bearing unit can stably secure excellent conductivity, and can be used with the existing bearing without requiring new processing on the bearing and without the restriction on the type of the bearing.

The above object of the present invention is achieved by the following configuration [1] related to a shaft grounding member for a rolling bearing.
[1] A shaft grounding member for a rolling bearing, the shaft grounding member being mounted on a rolling bearing unit including the inner ring rotating type rolling bearing in which an outer ring is fixed to a housing and in which a shaft directly connected to a motor is fitted into an inner ring, the shaft grounding member including: a spring plate including an annular portion and an elastic portion extending continuously from an inner peripheral side end portion of the annular portion to a center of the annular portion, the spring plate being made of a thin plate of a conductive material; and a soft conductive member mounted on a surface of the elastic portion on a side facing the rolling bearing, in which the soft conductive member is configured to abut against an end surface of the shaft, and in which the spring plate includes a plurality of bent portions provided at a portion of the annular portion facing a side surface of the outer ring so as to be bent in an axial direction, the plurality of bent portions being deformed to apply a pressing force to the outer ring.
   A preferred embodiment of the present invention related to the shaft grounding member for a rolling bearing relates to the following [2] to [9].
[2] The shaft grounding member for a rolling bearing according to [1], in which each of the bent portions is a cut-and-raised piece in which a portion between a pair of notches cut out from an outer peripheral edge of the annular portion is bent in the axial direction.
[3] The shaft grounding member for a rolling bearing according to [1], in which a portion between a pair of notches cut out from an outer peripheral edge of the annular portion of the plurality of bent portions includes one cut-and-raised piece bent to one side in the axial direction and the other cut-and-raised piece bent to the other side in the axial direction.
[4] The shaft grounding member for a rolling bearing according to [1], in which each of the bent portions is a folded piece in which a portion between a pair of notches cut out from an outer peripheral edge of the annular portion or a portion extending from the outer peripheral edge of the annular portion in a radial direction is folded back in the axial direction.
[5] The shaft grounding member for a rolling bearing according to [1], in which a portion between a pair of notches cut out from an outer peripheral edge of the annular portion of the plurality of bent portions or a portion extending from the outer peripheral edge of the annular portion in a radial direction includes one folded piece folded back to one side in the axial direction and the other folded piece folded back to the other side in the axial direction.
[6] The shaft grounding member for a rolling bearing according to [1], in which the annular portion is pressed against the side surface of the outer ring with a spacer interposed therebetween.
[7] The shaft grounding member for a rolling bearing according to [1], in which the soft conductive member is made of at least one selected from a resin-impregnated non-woven fabric, a non-woven fabric, a resin-impregnated woven fabric, a woven fabric, a resin-impregnated soft porous body, and a soft porous body.
[8] The shaft grounding member for a rolling bearing according to [1], in which the elastic portion of the spring plate is bent in a middle.
[9] The shaft grounding member for a rolling bearing according to [1], in which the elastic portion of the spring plate is formed flush with the annular portion.

The above object of the present invention is achieved by the following configuration [10] related to a rolling bearing unit.

A rolling bearing unit including: an inner ring rotating type rolling bearing in which an outer ring is fixed to a housing and in which a shaft directly connected to a motor is fitted to an inner ring; and the shaft grounding member for a rolling bearing according to any one of [1] to [9].

Hereinafter, the "shaft grounding member for a rolling bearing" is simply referred to as a "shaft grounding member", and the "rolling bearing unit" is simply referred to as a "bearing unit".

In the present invention, since the spring plate provided in the shaft grounding member includes the plurality of bent portions that are bent in the axial direction at the portion of the annular portion facing the side surface of the fixed ring and that apply the pressing force between the fixed ring and the bent portions by deforming themselves, it is possible to stably secure the conductivity with the fixed ring and the housing without providing another member such as a disc spring or a wave spring. Therefore, it is possible to prevent a decrease in conductivity due to looseness of fixation of the shaft grounding member, occurrence of vibration, or the like, and it is possible to reduce a shaft voltage which is a potential difference between the rotating member and the fixing member, to prevent electrolytic corrosion of the rolling bearing, and to release electromagnetic noise through between the rotating member and the fixing member. Occurrence of creep in the rolling bearing can be prevented.

The shaft grounding member according to the present invention includes a soft conductive member mounted on an elastic portion of a spring plate and abutting against the end surface of a shaft. The biasing force of the soft conductive member to the end surface of the shaft by the spring plate is not fairly strong, and the abrasion powder is less likely to be generated. Moreover, since the soft conductive member is made of a soft material, damage to the shaft that is the mating member is also small.

The shaft grounding member for a rolling bearing and the rolling bearing unit can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be minimized.

The bearing unit according to the present invention is provided with the shaft grounding member according to the present invention. Therefore, generation of the abrasion powder and damage to the mating member are prevented, and further, the bearing unit is highly versatile and does not require an increase in space.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIG. 1A is a perspective view showing an example of a shaft grounding member according to the present invention, and FIG. 1B is a front view thereof;
FIG. 2A is a cross-sectional view taken along a line A-A in FIG. 1B, and FIG. 2B is an enlarged cross-sectional view showing a bent portion between an annular portion and an elastic portion;
FIG. 3 is an enlarged cross-sectional view corresponding to FIG. 2B, showing another example of a cut-and-raised piece;
FIG. 4A is a cross-sectional view showing a state in which the shaft grounding member shown in FIGS. 1A and 1B is mounted on a housing and showing a state before the cut-and-raised piece is pressed against the outer ring side, and FIG. 4B is a cross-sectional view showing a state in which the shaft grounding member shown in FIGS. 1A and 1B is mounted on a bearing unit;
FIG. 5A is a perspective view showing a first modification of the shaft grounding member according to the embodiment of the present invention, and FIG. 5B is a front view thereof;
FIG. 6 is a cross-sectional view taken along a line B-B in FIG. 5B;

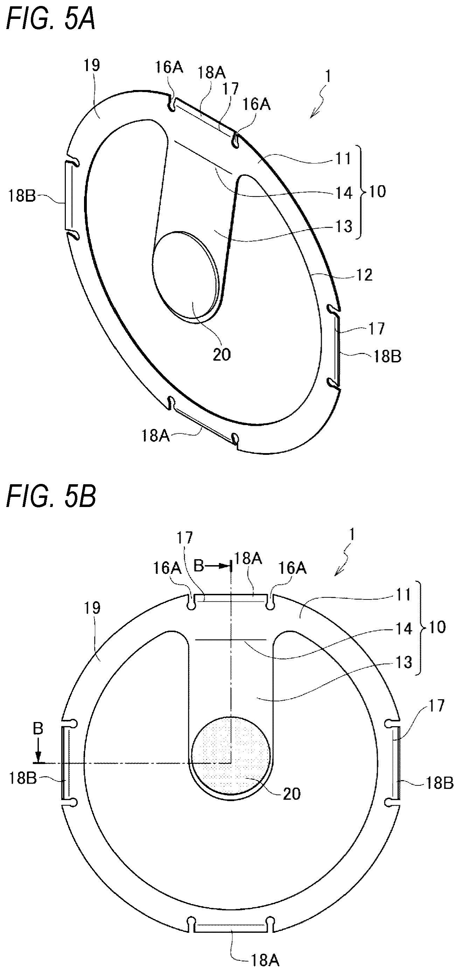

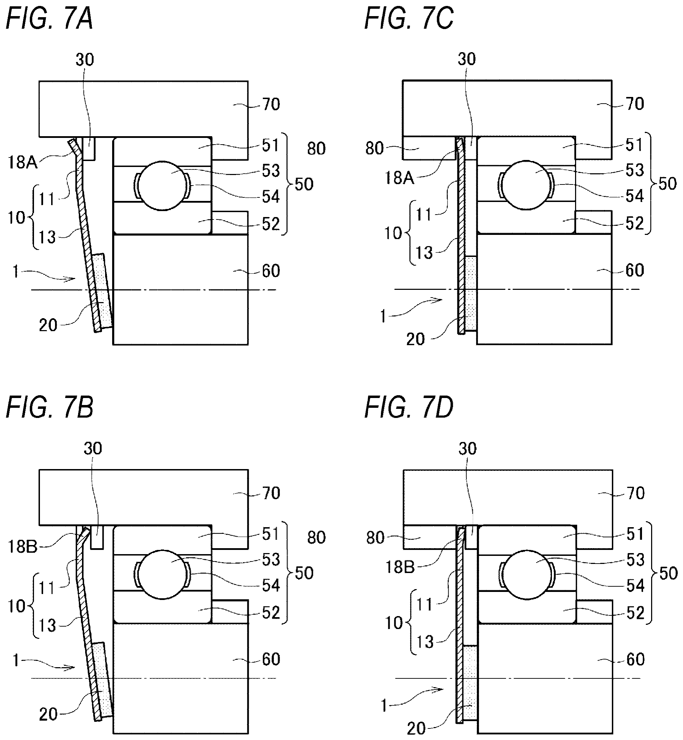

FIGS. 7A to 7D are views showing a state in which the shaft grounding member shown in FIGS. 5A and 5B is mounted on a housing, in which FIG. 7A is a cross-sectional view showing a state before one cut-and-raised piece is pressed against the outer ring side, FIG. 7B is a cross-sectional view showing a state before the other cut-and-raised piece is pressed against the outer ring side, FIG. 7C is a cross-sectional view showing a state in which the one cut-and-raised piece is pressed against the outer ring side via a spacer and the shaft grounding member is mounted on a bearing unit, and FIG. 7D is a cross-sectional view showing a state in which the other cut-and-raised piece is pressed against the outer ring side via the spacer and the shaft grounding member is mounted on the bearing unit;
FIG. 8A is a perspective view showing a second modification of the shaft grounding member according to the embodiment of the present invention, and FIG. 8B is a front view thereof;
FIG. 9 is a cross-sectional view taken along a line C-C in FIG. 8B;
FIG. 10A is a cross-sectional view showing a state in which the shaft grounding member shown in FIGS. 8A, 8B, and 9 is mounted on the housing and showing a state before a folded piece is pressed against the outer ring side, and FIG. 10B is a cross-sectional view showing a state in which the folded piece is pressed against the outer ring side via the spacer and the shaft grounding member is mounted on the bearing unit;
FIG. 11 shows a third modification of the shaft grounding member according to the embodiment of the present invention, and is a cross-sectional view corresponding to FIG. 2A; and
FIG. 12 is a cross-sectional view showing an example of a bearing unit provided with the shaft grounding member shown in FIG. 11.

### BRIEF DESCRIPTION OF THE DRAWINGS

Hereinafter, an embodiment of the present invention will be described in detail with reference to the drawings. The present invention is not limited to the embodiment to be described below, and can be implemented by being freely changed without departing from the gist of the present invention.

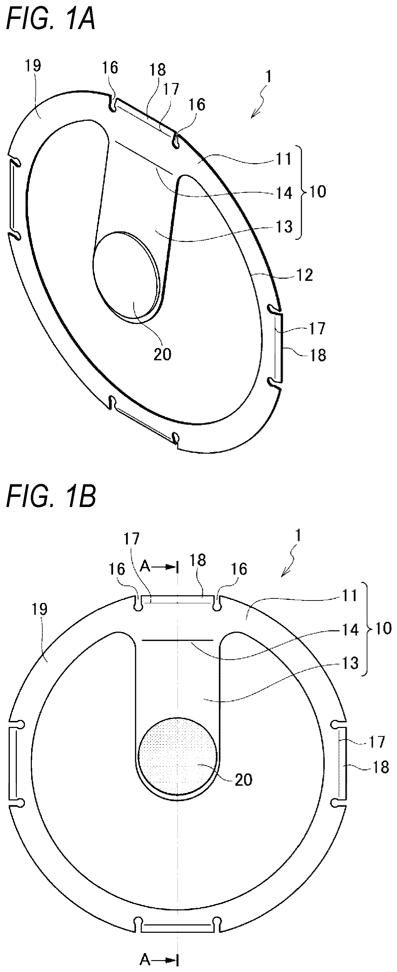

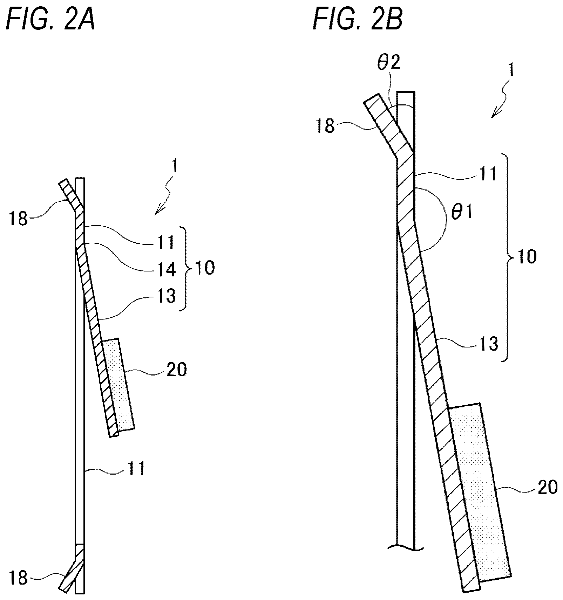

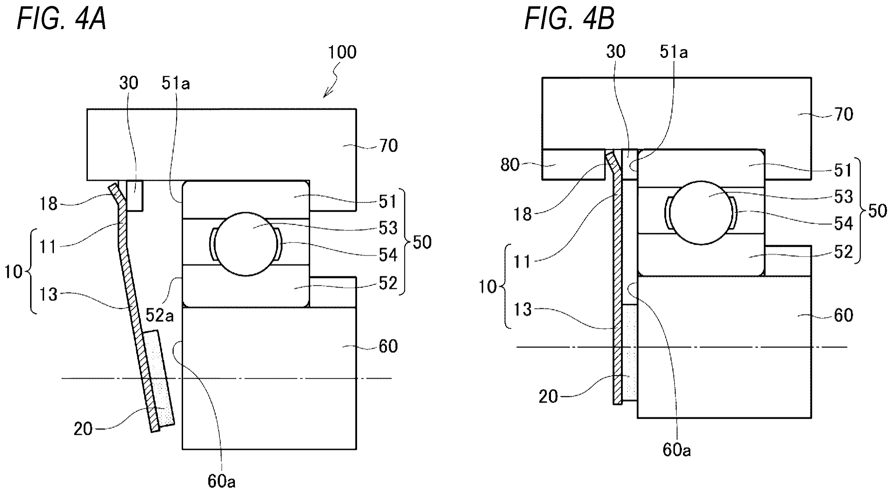

As shown in FIGS. 1A and 1B, a shaft grounding member 1 includes a spring plate 10 including an annular portion 11 and one elastic portion 13 extending from an inner peripheral side end portion 12 of the annular portion 11 toward the center of the annular portion 11. As shown in FIGS. 2A, 2B, 4A, and 4B, when the elastic portion 13 is mounted on a bearing unit 100, the elastic portion 13 is bent toward the right side in the figure from an elastic base portion 14 serving as a starting point so as to approach an end surface 60a of a shaft 60 fitted into an inner ring 52 of a rolling bearing 50.

The spring plate 10 is entirely made of a thin plate made of a conductive material such as metal. When the conductive material is metal, stainless steel is preferable because stainless steel is easy to process and is less prone to rust.

At the distal end portion of the elastic portion 13, that is, at the center portion of the annular portion 11, on the surface facing the end surface 60a of the shaft 60 fitted into the rolling bearing 50, a soft conductive member 20 is mounted, and the spring plate 10 and the soft conductive member 20 constitute the shaft grounding member 1. The soft conductive member 20 is mounted on the elastic portion 13 using the adhesive.

As the soft conductive member 20, a member obtained by mixing or supporting a conductive material in a soft base material, or a commercially available member referred to as a "conductive sheet" or the like can be used. Examples of the soft base material include at least one selected from a porous body and a resin-impregnated porous body. As the porous body, paper, cloth, a nonwoven fabric, a resin sheet, a sponge which is a soft porous body, or the like can be used. Among these materials, as the base material, it is preferable to use at least one selected from a nonwoven fabric, a woven fabric and a soft porous body such as a sponge, and a resin-impregnated nonwoven fabric, a resin-impregnated woven fabric and a resin-impregnated soft porous body such as a sponge. When a resin-impregnated material obtained by impregnating a porous body with resin is used as the base material of the soft conductive member 20, the skeleton is coated with resin, thereby improving the strength of the soft conductive member 20 to a desired level while maintaining the soft characteristics. Therefore, in particular, it is more preferable to use, as the base material, at least one selected from a resin-impregnated nonwoven fabric, a resin-impregnated woven fabric and a resin-impregnated soft porous body such as a sponge.

When a resin-impregnated porous body is used as the base material, a thermosetting resin is preferably used as the resin with which the porous body is impregnated. The thermosetting resin may be any varnish-shaped resin that can be impregnated into the base material and that is thermosetting, and examples of the thermosetting resin include a phenol resin, a modified phenol resin, an epoxy resin, a modified epoxy resin, a polyimide resin, a silicone resin, a polyester resin, a polyurethane resin, and a rubber resin.

As the conductive material to be mixed into or supported on the soft base material, it is preferable to use at least one selected from metal fibers such as silver, copper, gold, aluminum, and stainless steel, pulverized products and powders thereof, conductive carbon fibers, and pulverized products and powders thereof.

As shown in FIG. 2B, a bending angle θ1 between the annular portion 11 and the elastic portion 13 is appropriately set such that the soft conductive member 20 abuts against the end surface 60a of the shaft 60 when the soft conductive member 20 is mounted on the bearing unit 100. By the bending angle θ1, the biasing force of the soft conductive member 20 to the end surface 60a of the shaft 60 can be adjusted. By decreasing the bending angle θ1, the biasing force can be strengthened, and conversely, by increasing the bending angle θ1, the biasing force can be weakened.

The planar shape of the soft conductive member 20 is not limited, and may be a rectangular shape or a plurality of small pieces in addition to the circular shape shown in FIGS. 1A and 1B. It is preferable that the soft conductive member 20 abuts against the end surface 60a of the shaft 60 near the center portion of the shaft, and since the circumferential speed is low near the center portion of the shaft, the abrasion powder is less likely to be generated.

A plurality of notches 16 are formed in the annular portion 11 from the outer peripheral edge toward the inner peripheral side, and cut-and-raised pieces 18 (bent portions) bent from a starting point 17 are formed between the adjacent notches 16 and 16. The cut-and-raised piece 18 is bent in the axial direction such that the distal end is inclined toward the back side of the paper surface of FIG. 1B, that is, bent in a direction opposite to the axial direction in which the elastic portion 13 is bent. The distal end of the cut-and-raised piece 18 is formed in a linear shape, and is located on the inner diameter side with respect to a virtual circle connecting a plurality of arc portions in which the cut-and-raised piece 18 is not formed and in which the outer circumference is arc-shaped.

The cut-and-raised piece 18 may be bent in the axial direction such that the distal end thereof is inclined toward the front side of the paper surface of FIG. 1B. Although the cut-and-raised pieces 18 are formed at four positions at equal intervals in FIGS. 1A and 1B, the number of cut-and-raised pieces 18 is not limited. Further, as shown, the plurality of cut-and-raised pieces 18 are alternately formed with a plurality of arc portions, but are not limited thereto, and may be formed over the entire circumference of the annular portion 11.

As shown in FIG. 2B, a cut-and-raised angle θ2 of the cut-and-raised piece 18 with respect to the annular portion 11 is not limited, and is appropriately set according to a target biasing force (a pressing force). The biasing force can be weakened by reducing the cut-and-raised angle θ2, and conversely, the biasing force can be increased by increasing the cut-and-raised angle θ2.

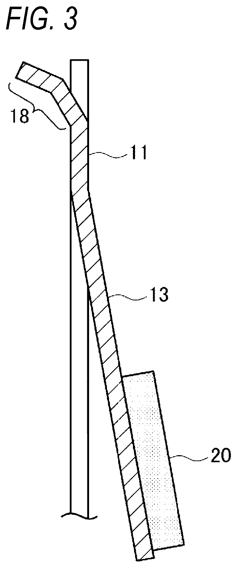

In FIG. 2B, the cut-and-raised piece 18 is formed by one bending process and has a flat surface, but as shown in FIG. 3, the cut-and-raised piece 18 may be bent a plurality of times (twice in the example in the drawing) in a plurality of stages to form a stepped cross section.

Such a spring plate 10 is formed by, for example, forming the spring plate 10 into a predetermined shape by blank processing, wire cutting, or laser processing, and then bending the spring plate 10 by pressing or the like, but the manufacturing method is not limited thereto.

FIGS. 4A and 4B show the bearing unit 100 on which the shaft grounding member 1 implemented as described above is mounted. The rolling bearing 50 includes a plurality of rolling elements (balls) 53 between an outer ring 51 and the inner ring 52, the plurality of rolling elements 53 are rollably held by a retainer 54, and the plurality of rolling elements 53 are lubricated by a lubricating oil or a grease composition. Here, the rotating ring is the inner ring 52, into which the shaft 60 directly connected to a motor (not shown) is fitted. The shaft 60 is fitted such that an end surface 60a is flush with an end surface 52a of the inner ring 52. The outer ring 51 is a fixed ring and is fixed to a housing 70. The configuration of the rolling bearing 50 is not limited thereto, and may be another configuration.

As shown in FIG. 4A, when the shaft grounding member 1 is mounted on the bearing unit 100, a conductive spacer 30 is fitted into the inner diameter side of the housing 70 in advance, and then the shaft grounding member 1 is fitted into the inner diameter side of the housing 70. Thereafter, a conductive pressing member 80 is fitted into the inner diameter side of the housing 70, and the pressing member 80 is pressed toward the outer ring 51. Accordingly, the annular portion 11 of the shaft grounding member 1 is pressed against the side surface of the outer ring 51 via the conductive spacer 30. Here, since the cut-and-raised piece 18 of the shaft grounding member 1 is elastically deformed by the pressing member 80, the spring reaction force in the axial direction acts on the spacer 30 and the pressing member 80, and as a result, the pressing force against a side surface 51a of the outer ring 51 via the spacer 30 also increases.

The spacer 30 may have a thickness in consideration of the pressing amount of the spring plate 10, the thickness of the soft conductive member 20, and the like. The annular portion 11 of the shaft grounding member 1 may directly abut against the side surface of the outer ring 51 without providing the spacer 30.

In the inner ring rotating type bearing unit 100 in which the shaft grounding member 1 is not incorporated, the current from the motor normally flows through the shaft 60 to the inner ring 52, and the rolling elements 53 and the outer ring 51 are energized inside the bearing, causing electrolytic corrosion in the rolling bearing 50. On the other hand, in the present invention, the soft conductive member 20 in the shaft grounding member 1 is mounted on the housing 70 so as to abut against the end surface 60a of the shaft 60. The annular portion 11 of the spring plate 10 is electrically connected to the side surface of the outer ring 51 via the conductive spacer 30, and is also electrically connected to the conductive pressing member 80.

Accordingly, the current from the shaft 60 flows from the soft conductive member 20 to the elastic portion 13 and the annular portion 11 of the spring plate 10, and flows to the housing 70 via the cut-and-raised pieces 18 of the annular portion 11, the outer peripheral edge of the arc portion of the annular portion 11, the pressing member 80, the spacer 30, and the outer ring 51. Since the outer ring 51 has a large contact area with the housing 70, the current flowing through the outer ring 51 does not pass through the rolling element 53 and flows into the housing 70.

In this way, in the shaft grounding member 1, since the shaft 60 which is the rotating member and the housing 70 which is the fixing member are grounded, the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be released through between the shaft 60 which is the rotating member and the housing 70 which is the fixing member.

In the present embodiment, the outer peripheral edge of the arc portion of the annular portion 11 and the spacer 30 abut against the housing 70. Alternatively, the outer peripheral edge and the spacer 30 may be held between the outer ring 51 and the pressing member 80 without abutting against the housing 70. In this case, the current flowing through the annular portion 11 flows to the housing 70 via the outer ring 51 and the pressing member 80.

Since the end surface 60a of the shaft 60 is in contact with the soft conductive member 20, the end surface 60a of the shaft 60 is not damaged, and the rotation torque of the shaft 60 can be prevented from decreasing.

Since the base material of the soft conductive member 20 has the oil absorption property and the oil retention property when the base material is a porous body, oil is easily discharged between the adjacent spring plates 10 when the shaft rotates, the oil film is less likely to form, and the conductivity is good even when the soft conductive member 20 is used in oil. By using the base material of the soft conductive member 20 as a porous body, the friction coefficient can be reduced even when the soft conductive member 20 is used in an environment other than the oil environment, and a reduction in the rotation torque of the inner ring 52 can be prevented.

Further, the spring plate 10 of the shaft grounding member 1 is a thin plate, and an increase in space of the bearing unit 100 can be minimized. Since there is no limitation on the rolling bearing 50 and there is no need to perform any processing, the rolling bearing 50 can be applied to the existing rolling bearing, and the versatility is fairly high.

As described above, by increasing the contact area between the soft conductive member 20 of the shaft grounding member 1 and the end surface 60a of the shaft 60 of the rolling bearing 50, the shaft voltage between the rotating member and the fixing member can be stably reduced. Since the spring plate 10 is entirely made of a bent thin plate and is an elastic member, by pressing the annular portion 11 of the shaft grounding member 1 toward the outer ring 51, the elastic force due to the pressing acts on the elastic portion 13, the elastic portion 13 is pushed apart such that the bending angle θ1 shown in FIG. 2B becomes larger, and the entire elastic portion 13 moves toward the rolling bearing 50. Accordingly, the portion of the soft conductive member 20 that is away from the end surface 60a of the shaft 60 in FIGS. 4A and 4B also moves toward the rolling bearing 50, and almost the entire soft conductive member 20 comes into contact with the end surface 60a of the shaft 60. Accordingly, the conductivity between the soft conductive member 20 and the inner ring 52 can be improved, the electrolytic corrosion of the rolling bearing 50 can be more effectively prevented, and the electromagnetic noise can be reduced.

Since the pressing force of the shaft grounding member 1 against the side surface of the outer ring 51 is increased by the cut-and-raised piece 18, even when axial backlash occurs between the outer ring 51 and the housing 70, the fixing of the shaft grounding member 1 is maintained, and the electrical contact between the annular portion 11 and the side surface of the outer ring 51 via the conductive spacer 30 and the electrical contact with the conductive pressing member 80 are maintained. Therefore, it is possible to further stably reduce the shaft voltage described above, and to prevent electrolytic corrosion and reduce electromagnetic noise.

Since the pressing force of the shaft grounding member 1 against the side surface of the outer ring 51 is increased by the cut-and-raised piece 18, even when the fitting between the outer ring 51 and the housing 70 becomes loose, the outer ring 51 can be fixed to the housing 70, and the creep of the rolling bearing 50 can be prevented.

In particular, in the bearing unit 100 in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the cut-and-raised piece 18 in the mounting portion of the shaft grounding member 1 is increased.

In the rolling bearing unit, a disc spring, a wave spring, or the like is generally used in order to prevent creep and backlash in the axial direction. However, the shaft grounding member 1 includes the cut-and-raised piece 18, so that a disc spring, a wave spring, or the like is not required, and the cost of the rolling bearing unit can be reduced.

### First Modification

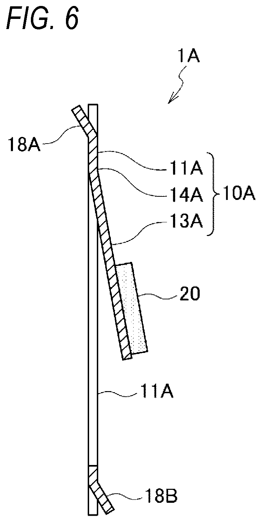

In the shaft grounding member 1 according to the above embodiment, all of the cut-and-raised pieces 18 are bent to one side in the axial direction. Alternatively, as shown in FIGS. 5A, 5B, and 6, one cut-and-raised piece 18A bent to one side in the axial direction and the other cut-and-raised piece 18B bent to the other side in the axial direction may be alternately formed.

In this case, as shown in FIG. 7, when the annular portion 11 of the shaft grounding member 1 is pressed against the side surface of the outer ring 51 via the conductive spacer 30 by the conductive pressing member 80, the cut-and-raised pieces 18A and 18B of the shaft grounding member 1 are also elastically deformed by the pressing member 80, and the spring reaction force in the axial direction also acts on the spacer 30 and the pressing member 80. Accordingly, the pressing force against the side surface 51a of the outer ring 51 via the spacer 30 is also increased, the fixing of the shaft grounding member 1 is more reliably maintained, and the same effect as that of the above embodiment can be attained.

The one cut-and-raised piece 18A and the other cut-and-raised piece 18B are not limited to being alternately formed, and any one of the cut-and-raised pieces 18A and 18B may be formed at any position.

### Second Modification

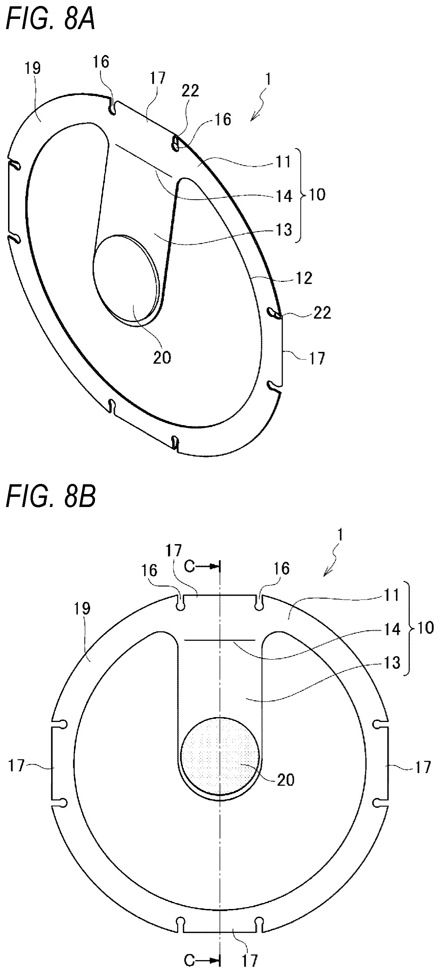

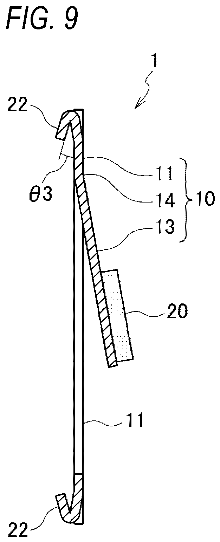

As shown in FIGS. 8A, 8B, and 9, the shaft grounding member 1 may have a plurality of folded pieces 22 (bent portions) instead of the plurality of cut-and-raised pieces 18 which are biasing portions in the above embodiment.

A plurality of notches 16 are formed in the annular portion 11 from the outer peripheral edge toward the inner peripheral side, and the folded piece 22 folded back from the starting point 17 is formed between the adjacent notches 16 and 16. The folded piece 22 is formed by folding back the distal end toward the back side of the paper surface of FIG. 8B, that is, folded back in a direction opposite to the axial direction in which the elastic portion 13 is bent. The starting point 17 of the folded piece 22 is located on the inner diameter side with respect to a virtual circle connecting a plurality of arc portions in which the folded piece 22 is not formed and in which the outer periphery has an arc shape.

The folded piece 22 may be formed by folding back the distal end toward the front side of the paper surface of FIG. 8B. Although the folded pieces 22 are formed at four positions at equal intervals in FIGS. 8A and 8B, the number of folded pieces 22 is not limited. Further, as shown, the plurality of folded pieces 22 are alternately formed with a plurality of arc portions, but are not limited thereto, and may be formed over the entire circumference of the annular portion 11.

As shown in FIG. 9, a bending angle θ3 of the folded piece 22 with respect to the annular portion 11 is not limited, and is appropriately set according to a target biasing force (a pressing force). The biasing force can be weakened by reducing the bending angle θ3, and the biasing force can be increased by increasing the bending angle θ3.

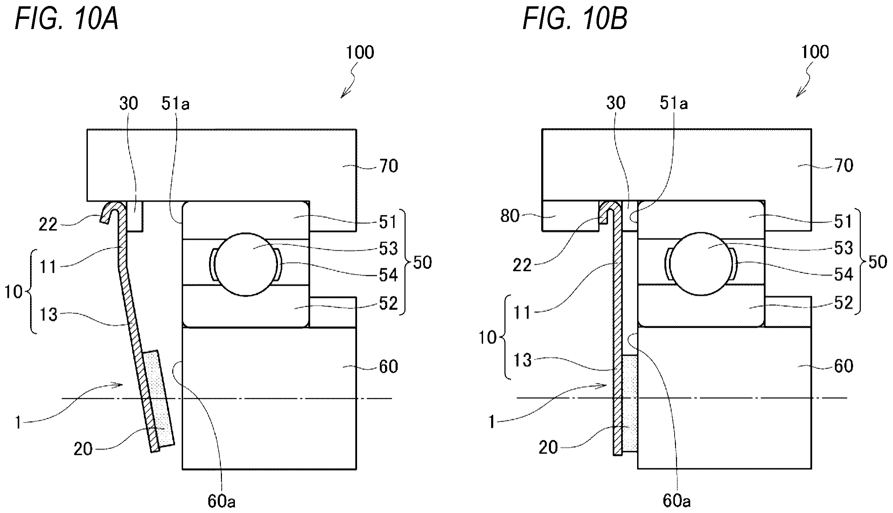

In this case, as shown in FIG. 10, when the annular portion 11 of the shaft grounding member 1 is pressed against the side surface of the outer ring 51 via the conductive spacer 30 by the conductive pressing member 80, the folded piece 22 of the shaft grounding member 1 is also elastically deformed by the pressing member 80, and the spring reaction force in the axial direction also acts on the spacer 30 and the pressing member 80. Accordingly, the pressing force against the side surface 51a of the outer ring 51 via the spacer 30 is also increased, the fixing of the shaft grounding member 1 is more reliably maintained, and the same effect as that of the above embodiment can be attained.

The folded piece 22 according to a second modification is formed by folding back a portion between the adjacent notches 16 and 16 in the axial direction, and may be formed by folding back, in the axial direction, a portion extending from the outer peripheral edge of the annular portion 11 in the radial direction.

In the folded piece according to the second modification, similarly to the cut-and-raised piece according to the first modification, the portion between the pair of notches 16 and 16 cut out from the outer peripheral edge of the annular portion 11 or the portion extending from the outer peripheral edge of the annular portion 11 in the radial direction may include one folded piece folded back to one side in the axial direction and the other folded piece folded back to the other side in the axial direction.

The present invention is not limited to the above embodiment, and may be modified and improved as appropriate.

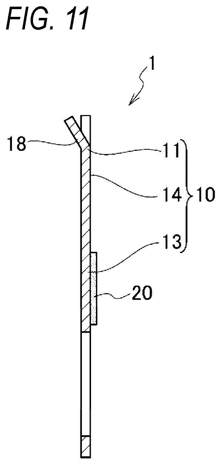

For example, in the above embodiment, the first modification, and the second modification, the elastic portion 13 of the spring plate 10 is bent in the middle. Alternatively, as a third modification, the elastic portion 13 may be formed flush with the annular portion 11 without being bent by the elastic base portion 14. That is, as shown in FIG. 11, the annular portion 11 and the elastic portion 13 are linearly continuous in the side view. In FIG. 2A, the cut-and-raised pieces 18 are formed in two pairs of regions facing each other. Alternatively, the cut-and-raised pieces 18 may be formed at any position. For example, as shown in FIG. 11, a portion where the cut-and-raised piece 18 is formed and a portion where the cut-and-raised piece 18 is not formed may face each other.

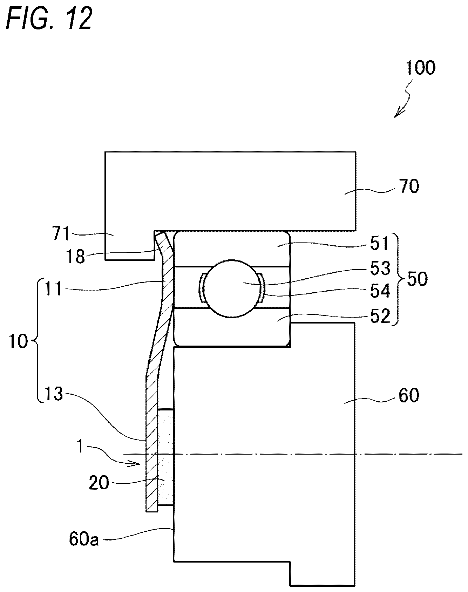

Therefore, in the bearing unit 100 shown in FIG. 12, when the annular portion 11 of the shaft grounding member 1 is held between a flange portion 71 of the housing 70 and the side surface of the outer ring 51, the elastic portion 13 of the shaft grounding member 1 is elastically deformed by an amount equal to the thickness of the soft conductive member 20, and the soft conductive member 20 abuts against the end surface 60a of the shaft 60 by the bending reaction force of the spring plate 10. Accordingly, the same function as that of the above embodiment can be achieved.

In this case, since bending of the spring plate 10 is not required, the shaft grounding member 1 can be manufactured at low cost, and the spring plate 10 and the soft conductive member 20 can be bonded together easily.

In the present embodiment, the spring plate includes one elastic portion extending toward the center of the annular portion. Alternatively, the spring plate may include a plurality of elastic portions extending in a radial shape toward the center of the annular portion.

The shaft grounding member according to the present invention can also be suitably used in the case of achieving only one of prevention of electrolytic corrosion and prevention of generation of electromagnetic noise.

When the prevention of electrolytic corrosion is mainly achieved, the "shaft grounding member" in the present specification can be read as an "electrolytic corrosion prevention member", and the "rolling bearing unit" can be read as an "electrolytic corrosion prevention rolling bearing unit". Specifically, the electrolytic corrosion prevention member and the electrolytic corrosion prevention rolling bearing unit are as follows.
(1) An electrolytic corrosion prevention member for a rolling bearing, the electrolytic corrosion prevention member being mounted on a rolling bearing unit including the inner ring rotating type rolling bearing in which an outer ring is fixed to a housing and in which a shaft directly connected to a motor is fitted into an inner ring, the electrolytic corrosion prevention member including:
   a spring plate including an annular portion and an elastic portion extending continuously from an inner peripheral side end portion of the annular portion to a center of the annular portion, the spring plate being made of a thin plate of a conductive material; and
   a soft conductive member mounted on a surface of the elastic portion on a side facing the rolling bearing,
   in which the soft conductive member is configured to abut against an end surface of the shaft, and
   in which the spring plate includes a plurality of bent portions provided at a portion of the annular portion facing a side surface of the outer ring so as to be bent in an axial direction, the plurality of bent portions being deformed to apply a pressing force to the outer ring.
(2) The electrolytic corrosion prevention member for a rolling bearing according to (1),
   in which each of the bent portions is a cut-and-raised piece in which a portion between a pair of notches cut out from an outer peripheral edge of the annular portion is bent in the axial direction.
(3) The electrolytic corrosion prevention member for a rolling bearing according to (1),
   in which a portion between a pair of notches cut out from an outer peripheral edge of the annular portion of the plurality of bent portions includes one cut-and-raised piece bent to one side in the axial direction and the other cut-and-raised piece bent to the other side in the axial direction.
(4) The electrolytic corrosion prevention member for a rolling bearing according to (1),
   in which each of the bent portions is a folded piece in which a portion between a pair of notches cut out from an outer peripheral edge of the annular portion or a portion extending from the outer peripheral edge of the annular portion in a radial direction is folded back in the axial direction.
(5) The electrolytic corrosion prevention member for a rolling bearing according to (1),
   in which a portion between a pair of notches cut out from an outer peripheral edge of the annular portion of the plurality of bent portions or a portion extending from the outer peripheral edge of the annular portion in a radial direction includes one folded piece folded back to one side in the axial direction and the other folded piece folded back to the other side in the axial direction.
(6) The electrolytic corrosion prevention member for a rolling bearing according to any one of (1) to (5),
   in which the annular portion is pressed against the side surface of the outer ring with a spacer interposed therebetween.
(7) The electrolytic corrosion prevention member for a rolling bearing according to any one of (1) to (6),
   in which the soft conductive member is made of at least one selected from a resin-impregnated non-woven fabric, a non-woven fabric, a resin-impregnated woven fabric, a woven fabric, a resin-impregnated soft porous body, and a soft porous body.
(8) The electrolytic corrosion prevention member for a rolling bearing according to any one of (1) to (7),
   in which the elastic portion of the spring plate is bent in a middle.
(9) The electrolytic corrosion prevention member for a rolling bearing according to any one of (1) to (7),
   in which the elastic portion of the spring plate is formed flush with the annular portion.
(10) An electrolytic corrosion prevention rolling bearing unit including:
   an inner ring rotating type rolling bearing in which an outer ring is fixed to a housing and in which a shaft directly connected to a motor is fitted to an inner ring; and
   the electrolytic corrosion prevention member for a rolling bearing according to any one of (1) to (9).

When the prevention of generation of electromagnetic noise is mainly achieved, the "shaft grounding member" in the present specification can be read as an "electromagnetic noise prevention member", and the "rolling bearing unit" can be read as an "electromagnetic noise prevention rolling bearing unit".

## Claims

1. A shaft grounding member for a rolling bearing, the shaft grounding member being mounted on a rolling bearing unit including the inner ring rotating type rolling bearing in which an outer ring is fixed to a housing and in which a shaft directly connected to a motor is fitted into an inner ring, the shaft grounding member comprising:
a spring plate including an annular portion and an elastic portion extending continuously from an inner peripheral side end portion of the annular portion to a center of the annular portion, the spring plate being made of a thin plate of a conductive material; and
a soft conductive member mounted on a surface of the elastic portion on a side facing the rolling bearing,
wherein the soft conductive member is configured to abut against an end surface of the shaft, and
wherein the spring plate includes a plurality of bent portions provided at a portion of the annular portion facing a side surface of the outer ring so as to be bent in an axial direction, the plurality of bent portions being deformed to apply a pressing force to the outer ring.

2. The shaft grounding member for a rolling bearing according to claim 1,
wherein each of the bent portions is a cut-and-raised piece in which a portion between a pair of notches cut out from an outer peripheral edge of the annular portion is bent in the axial direction.

3. The shaft grounding member for a rolling bearing according to claim 1,
wherein a portion between a pair of notches cut out from an outer peripheral edge of the annular portion of the plurality of bent portions includes one cut-and-raised piece bent to one side in the axial direction and the other cut-and-raised piece bent to the other side in the axial direction.

4. The shaft grounding member for a rolling bearing according to claim 1,
wherein each of the bent portions is a folded piece in which a portion between a pair of notches cut out from an outer peripheral edge of the annular portion or a portion extending from the outer peripheral edge of the annular portion in a radial direction is folded back in the axial direction.

5. The shaft grounding member for a rolling bearing according to claim 1,
wherein a portion between a pair of notches cut out from an outer peripheral edge of the annular portion of the plurality of bent portions or a portion extending from the outer peripheral edge of the annular portion in a radial direction includes one folded piece folded back to one side in the axial direction and the other folded piece folded back to the other side in the axial direction.

6. The shaft grounding member for a rolling bearing according to claim 1,
wherein the annular portion is pressed against the side surface of the outer ring with a spacer interposed therebetween.

7. The shaft grounding member for a rolling bearing according to claim 1,
wherein the soft conductive member is made of at least one selected from a resin-impregnated non-woven fabric, a non-woven fabric, a resin-impregnated woven fabric, a woven fabric, a resin-impregnated soft porous body, and a soft porous body.

8. The shaft grounding member for a rolling bearing according to claim 1,
wherein the elastic portion of the spring plate is bent in a middle.

9. The shaft grounding member for a rolling bearing according to claim 1,
wherein the elastic portion of the spring plate is formed flush with the annular portion.

10. A rolling bearing unit comprising:
an inner ring rotating type rolling bearing in which an outer ring is fixed to a housing and in which a shaft directly connected to a motor is fitted to an inner ring; and
the shaft grounding member for a rolling bearing according to any one of claims 1 to 9.
